# EUROPEAN PATENT APPLICATION

(11) **EP 1 292 142 A1**
(43) Date of publication of application: **12.03.2003**
(21) Application number: 01118864.6
(22) Date of filing: 16.08.2001
(51) Int. Cl.: H04N 7/16, H04N 7/173, H04N 5/00

(54) **Single subscriber multiple set top boxes linkage device**

(71) Applicant: Mentor Data System Inc., Hsinchu (TW)
(72) Inventor: Wang, Chein H., Science-based Industrial Parks, Hsinchu (TW); Tone, Kwang-Sing, Science-based Industrial Parks, Hsinchu (TW); Wu, Chien-Chia, Hsinchu (TW); Chang, Hsi-Chiang, Taipei (TW)
(74) Representative: Casalonga, Axel

(57) **Abstract**

A single subscriber multiple set top boxes linkage device has a real time video and audio compressor which provides a digitized payment signal, a subscriber management unit providing a subscriber pairing signal to a linkage control unit, which is responsible to the pairing, and a multiplexer. The set top boxes are classified as a master and at least two slaves. The master emits linkage control signals continuously to assure whether the pairing is correct. When the slave receives the linkage control signal, it is contrasted with the clock from the head end to assure a correct pairing. The mounting work is convenient without necessary to further add control signal wire or other dedicated accessories. Therefore, the cost is low. Moreover, a dynamic encryption is used in the present invention, which is highly reliable in safety and is very difficult to be decrypted.

## Description

### FIELD OF THE INVENTION

The present invention relates to a linkage device of set top box of a cable TV, and especially to a single subscriber multiple set top boxes linkage device having a master and a plurality of slaves.

### BACKGROUND OF THE INVENTION

With the application of payment TV, it is very commonly that a subscriber has at least two set top boxes. However, many system providers only charge fees of mounting the second set top box. Therefore, the second (or third, fourth,...) is easily moved to other application by the subscriber or is commonly used by many subscribers. Therefore, a linkage mechanism is necessary for single subscriber multiple set top boxes so that the system providers have lose. Therefore, it is necessary to build a linkage mechanism so that the set top box work in a finite physical range without being used in other applications.

When a single subscriber mounts a plurality of set top boxes, each set top box can be operated singly for selection, then through the linkage mechanism, the slave can not separate with the master to be used independently. The prior art linkage methods include line linkage method, dedicated accessory method, power signal control method, etc. These methods will be described in the following:

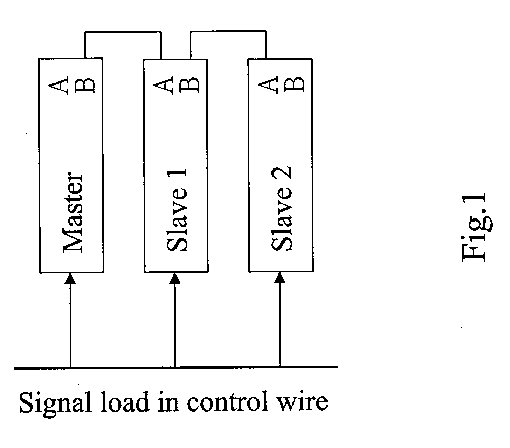

Referring to Fig. 1, in the line linkage method, the slave and master of set top boxes are connected to a signal load in control line and the master and slave are connected in series by connecting wires so that the slave can not separate from the master to work independently. However, this method is necessary to add other extra wires. Not only the work is hard, but also the cost is high and many wires are necessary to be used. In mounting, since the master and slave are wired at different ways, if errors occur, the slave and master can not work independently. This makes some troubles.

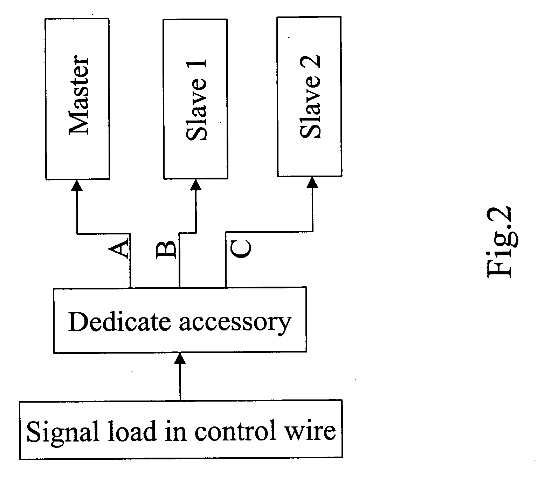

Another method is a dedicated accessory control method, as shown in Fig. 2. In that, a signal load in power wire is at least connected to dedicate accessory, such as a distributor, and then this dedicate accessory is mounted with a master and a slave. Using the dedicated accessory not only the signal can be distributed, but also it can be used to transfer signal internally. A DC signal control way is commonly used. In other words, the dedicate accessory utilize a DC bypass method to send a DC control signal of the master from point A to point B and point C. The slave detects whether the signal exists. If not, then no work is performed. The signal form the master may be a DC or an AC high or low voltage pulse or RF high frequency control signal. The DC or digital pulses have lower cost. The defects of this method is that if a distributor network is original equipped, then the original equipment must be updated by dedicated accessories which has a higher cost. Furthermore, for different numbers of slaves, different dedicated accessories must be designed. Therefore, the cost of stock is high.

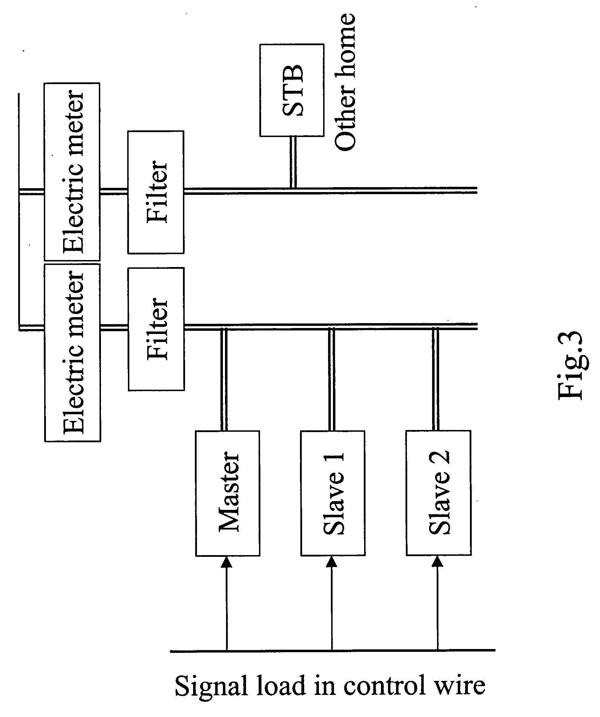

The last method is a high voltage power signal control method, as shown in Fig. 3. In that, the control signal is modulated in the power wire for transmission. Then a filter is added to the electric meter at home for prevent the signal from being transferred to other home. However, the filter is cost-high and labor - wasted so that other cost is increased.

### SUMMARY OF THE INVENTION

Accordingly, the primary object of the present invention is to provide a single subscriber multiple set top boxes linkage device and the method of the same, wherein the mounting work is convenient without necessary to further add control signal wire or other dedicated accessories. Therefore, the cost is low. Moreover, a dynamic encryption is used in the present invention, which is highly reliable in safety and is very difficult to be decrypted. The pairing of the master and slave of the set top boxes are controlled by the head end.

Another object of the present invention is to provide a single subscriber multiple set top boxes linkage device and the method of the same, wherein the current used network will not be interfered, furthermore, the set top boxes will not be destroyed by mistake connection.

A further object of the present invention is to provide a single subscriber multiple set top boxes linkage device and the method of the same, wherein the pairing of the master and slave of the set top boxes are controlled by the head end. Each set top box has a special series number, the setting can not be changed by errors or manually. The slave and master have same hardware circuit. The producing work is convenient. It is unnecessary to adjust in mounting. The two are identified by a software. The numbers of the slaves and masters are not confined. It is only necessary that the loss of the distributor is below 12dB.

A further object of the present invention is to provide a single subscriber multiple set top boxes linkage device and method of the same, wherein the control protocol can be modified as desired for suiting various software control process of the service provider.

To achieve above object, the single subscriber multiple set top boxes linkage device of the present invention has a real time video and audio compressor which provides a digitized payment TV signal, a subscriber management unit being a charging system and providing a subscriber pairing signal to a linkage control unit, which is responsible to the pairing and control of a set top box so that the linkage control unit outputs a pairing digital signal; a multiplexer connected to the real time video and audio compressor and the linkage control unit for mixing the received digital signal. Then the mixed signal is transferred to a scrambler for scrambling the signal. Then a QAM modulator is utilized to modulate the digital signal and upper converted so that the signal can be sent to an photoreceiver through a TV network and a trunk amplifier. Then a plurality of distributors and and a home distributor connected to the trunk amplifier 26 are used to sent the digital signal to the two set top boxes of a subscriber for pairing the multiple set top boxes into a master A and a slave B.

To achieve above object, in the present invention, a subscriber management unit and a linkage control signal output a pairing digital signal. The signal is mixed by a multiplexer, scrambled by a scrambler and modulated and up-converted by a QAM modulator. Then the signal is transferred to a photoreceiver and trunk amplifier to be sent to the plurality of set top boxes of a subscriber by a plurality of distributors so as to classify the set top boxes as a master and a plurality of slaves. Then the master sends a linkage control signal for assuring that the pairing is correct.

The various objects and advantages of the present invention will be more readily understood from the following detailed description when read in conjunction with the appended drawing.

### BRIEF DESCRIPTION OF THE DRAWINGS

Fig. 1 is a schematic view of the method used in the prior art linkage method.
Fig. 2 is a schematic view of the control method of dedicated accessories in the prior art linkage method.
Fig. 3 is a schematic view of the control method of power signal in the prior art linkage method.
Fig. 4 shows a system structure of the present invention.
Fig. 5 is a structural schematic view of the set top box in the present invention.
Fig. 6 is a schematic view of the satellite set top boxes of the present invention.

### DETAILED DESCRIPTION OF THE INVENTION

In order that those skilled in the art can further understand the present invention, a description will be described in the following in details. However, these descriptions and the appended drawings are only used to cause those skilled in the art to understand the objects, features, and characteristics of the present invention, but not to be used to confine the scope and spirit of the present invention defined in the appended claims.

In the present invention, the decaying characteristics of a distributor is used to match a RF (radio frequency) control mechanism to prevent the set top box (STB) to be utilized illegally. Therefore, the object of a single subscriber to control a plurality of set top boxes is achieved.

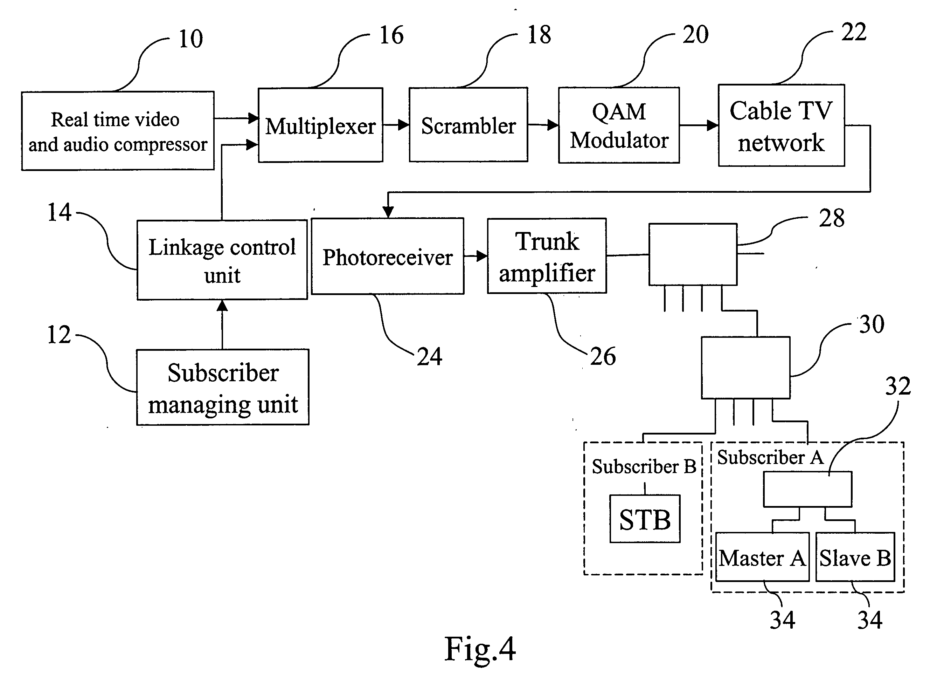

Referring to Fig. 4, the single subscriber multiple set top boxes linkage device of the present invention has a real time video and audio compressor 10 which provides a digitized payment TV signal, a subscriber management unit 12 being a charging system and providing a subscriber pairing signal to a linkage control unit 14, which is responsible to the pairing and controlling of a set top box so that the linkage control unit 14 outputs a pairing digital signal; a multiplexer 16 connected to the real time video and audio compressor and the linkage control unit 14 for mixing the received digital signal. Then the mixed signal is transferred to a scrambler 18 for scrambling the signal. Then a QAM modulator 20 is utilized to modulate and upper converted digital signal so that the signal can be sent to a photoreceiver 24 through a TV network and a trunk amplifier 26. Then a plurality of distributors 28 and 30 and a home distributor 32 connected to the trunk amplifier 26 are used to sent the digital signal to the two set top boxes 34 of a subscriber for pairing the multiple set top boxes 34 into a master A and a slave B.

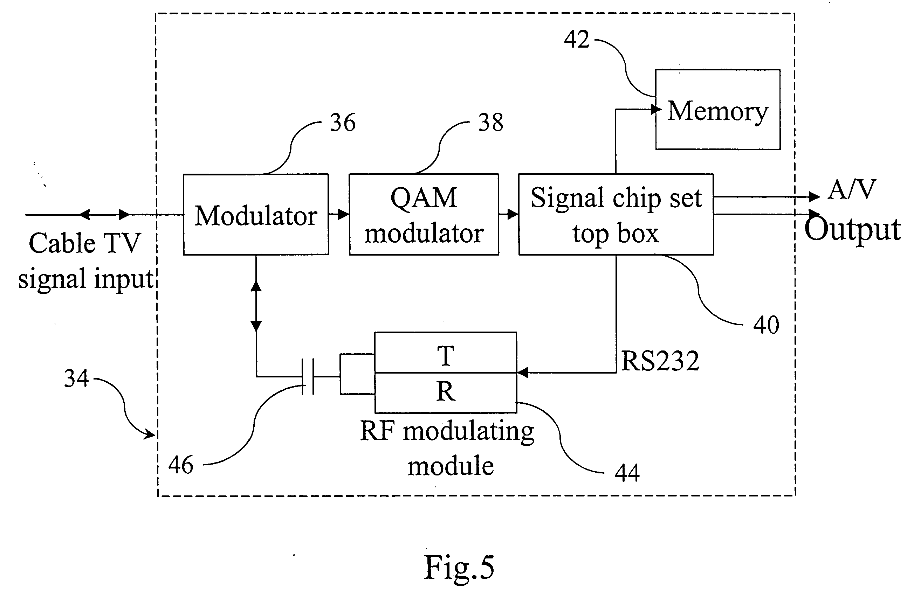

The structure of the set top box 34 is illustrated in Fig. 5. The set top box has a tuner 36 for tuning and receiving cable TV signal and then using a QAM demodulator 38 to demodulate the digital signal of the cable TV. A single chip set top box 40 is connected to the demodulator for restoring and outputting the digital signal and then sending it to a TV screen. The single chip set top box 40 may register an image to a memory 42 including a DRAM and a Flash memory for accessing. An RF modulating module 44 is used to be serially connected to the single chip set top box 40 for receiving a control signal and emitting a linkage control signal. Then a by-pass capacitor 46 is connected to the RF modulating module 44 and the tuner 36 for isolating a DC level so as to pass an AC signal.

With reference to Fig. 4, a head end subscriber management unit 12 sends a pairing signal to the linkage control unit 14. The pairing signal includes a master series number and a slave series number. Since each set top box 34 has a unique series number, and therefore, the series numbers of master and slave are not repeated. The linkage control unit 14 will convert this pairing signal into a pairing digital signal of a format of DVB Transport Stream to be sent to the multiplexer 16 for emitting out. After being sent by the cable TV network, it is sent to the multiple set top boxes 34 of the subscriber. This signal is sent many times. The success of pairing is asserted in the subscriber end by the installer. The multiple set top boxes 34 are set as master and slaves. The success of pairing is displayed at the TV screen connected to the set top boxes 34.

The success set top boxes 34 will emit RF control signals continuously to determine whether the pairing of the slave and the master is correct. In detail, the set top box 34A set as a master adds a timing code at the head end according to the communication devices of the linkage control unit 14 for sending a linkage control signal with a format of f(master series number, slave series number A, slave series number B, ..., time code, random code), where f function represents scrambling code which may be a 3-DES or other formats. The way of scrambling code is to download from the head end to the set top box for isolating the operations of different service providers. When the set top box 34B of a slave receives the linkage control signal, it will contrast with the initial setting pairing signal for assuring the correction of the pairing of the slave 34B and the master 34A. Furthermore, the slave 34B compares the time code from the head end with the time code of the linkage control signal. If correct, it is assured. Otherwise, after several failures, the slave 34B can not work and it must be installed and set by the installer.

The object of above linkage control signal being added with time code and random code is to prevent the communication linkage signal is interrupted and recorded, and then is used repeatedly. This way has the advantage that each time the master sends different linkage control signals which are varied with time.

To avoid that at the same cable TV network, linkage control signals from the masters of different subscribers are impacted to each other, in the present invention, the following mechanism is used, (1) according to the last three series numbers of a master and head end propagating standard clock, timings for sending signals are alternative. For example the last three codes are 123, the master selects the last 23 seconds of each minutes to send the linkage control signal. Since in decimal code, only 0 ∼ 5 are used, and the centesimal and unit uses the numbers of 0 ∼ 9, the last three codes have 540. Therefore, each master may sends a linkage control signal repeatedly every 10 minutes.(2) In working, each slave will determine whether the linkage control signal from a master is received (every 10 minutes) based on the master series number from the head end (from the pairing signal) and the propagating clock. If this signal is not received several times at one day, then a "linkage failure, system stop, please consult the service member" will be displayed on a TV screen. (3) Even the master is a stand-by condition, linkage control signals can be sent out at a fixed time period for assuring the pairing of the master and slave.

According to above time alternative mechanism, in the same network, the possibility that the impact of RF linkage control signals from two masters are reduced greatly. Since the signal transfers over a distributor of the same level, the linkage control signal of the master will be decayed over 20dB. Thus the work of other master will not be interfered. As a result, the interference of the RF signals from different masters can be avoided effectively based on the time division and multiplexing of the master series number and the propagating clock signal (timing code).

Besides, in the present invention, the slave 34B can be effectively to be moved from subscriber A to subscriber B. With reference to Fig. 4, the general decay in the home distributor of subscriber A is about 3 ∼ 6 dB. Therefore, for the master 34A and slave 34B of the set top box 34, the decay of RF signal from the master 34A to the slave 34B is about 3 ∼ 6 dB, while the decay of the subscriber distributor 30 is 12 dB or higher. Furthermore, the adjacent interference has a decay of 24 dB or higher. Therefore, the RF linkage control signal from the master 34A of the subscriber firstly passes through the home distributor 32 (with a decay of 3 ∼ 6 dB), and then is transferred to the subscriber B through the subscriber distributor 30 with a decay of above 30dB. Therefore, if the master 34A of the subscriber A is moved to the subscriber B, since the RF linkage control signal has a higher decay (over the designed 12dB), the slave 34B will not work. Similarly, when the set top box 34 of the subscriber A is moved to a farther place, since the distributors passing through is increased, the RF linkage control signal has a higher decay so that the set top box can not work. Therefore, the RF modulator of the set top box according to the present invention has a sensitivity of 12 dB for being work effectively. Therefore, a plurality of set top boxes in the same subscriber work normally, while as it is used in other subscribers, the signal will be decayed with a value larger than 12 dB, so that it can not work normally so as to avoid the cable TV is used illegally.

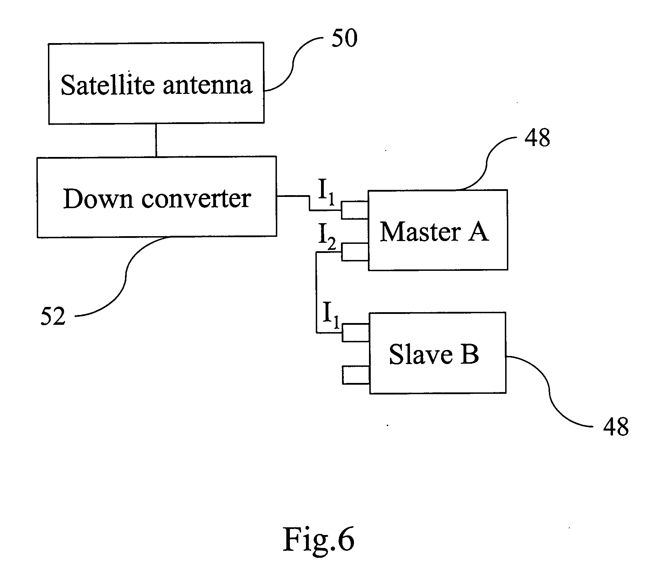

Other than above embodiments, the present invention can be used to set top boxes receiving from a direct propagating satellite. Referring to Fig. 6, the input end I₁ of the satellite set top box 48A is illustrated. A satellite antenna 50 receives a signal, and then the signal is down-converted by a down converter 52 to be inputted to the input end I, of the satellite set top box 48A. The L - band low frequency signal is by-passed through the input end I, of the satellite set top box 48A to the input end I₂ of the satellite set top box 48A, and then it is serially connected to the input end I₁ of the satellite set top box 48B so that the two satellite set top boxes 48A and 48B may receive the lower frequency signal. Meanwhile, the input end I₁ of the satellite set top box 48 is added with a RF receiving module. A RFTX modulating module is added to the input end I₂. As a result, the linkage mechanism is applied to the set top box of a direct propagation satellite.

The head end of the direct propagating satellite may display a pairing control signal and a clock signal to the satellite set top box 48 for pairing the two satellite set top box 48 into a master A and a slave B. After pairing the satellite set top boxes 48A and 48B, the satellite set top box 48A as a master will send a linkage control signal to the slave 48B periodically for assuring whether the pairing is successful. The action and principle are identical to the embodiment of the cable TV. Therefore, the details will not be further described. Since the L band signal has a band width between 950 to 2050 MHz, the decay of the signal is increased with the length of the wire. Therefore, the physical range of the slave 48B can be confined effectively. Therefore, using this linkage mechanism may prevent two nearby user from using the same account to avoid to pay fees of TV.

In the present invention, the original signal network is used, the mounting work being convenient without necessary to further add control signal wire or other dedicated accessories. Therefore, the cost is low. Moreover, a dynamic encryption is used in the present invention, which is highly reliable in safety and is very difficult to be decrypted. The pairing of the master and slave of the set top boxes are controlled by the head end. Each set top box has a special series number, the setting can not be changed by errors or manually. The slave and master have same hardware circuit. The producing work is convenient. It is unnecessary to adjust in mounting. The two are identified by a software. The numbers of the slaves and masters are not confined. It is only necessary that the loss of the distributor is below 12dB.

The present invention are thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A single subscriber multiple set top boxes linkage device comprising:
a real time video and audio compressor for providing a digitized payment TV signal;
a linkage control unit responsive for pairing and controlling set top boxes;
a subscriber management unit for providing subscriber pairing signals to the linkage control unit so as to output a pairing digital signal;
a multiplexer being connected to the real time video and audio compressor and the linkage control unit for receiving the digital signal and then mixing the received digital signal;
a scrambler for scrambling the digital signal received from the multiplexer and then using a modulator to modulate and up-convert the digital signal so that the signal is transferred to a photoreceiver and a trunk amplifier; and
a plurality of distributors being connected to the trunk amplifier for transferring the digital signal to at least two set top boxes of a subscriber for pairing and classifying the set top boxes into a master and a slave.

2. The single subscriber multiple set top boxes linkage device as claimed in claim 1, wherein the subscriber pairing signal from the subscriber management unit comprises a master series number and a slave series number.

3. The single subscriber multiple set top boxes linkage device as claimed in claim 1, wherein the set top box set as a master is added with a time code based on the control signal of the linkage control unit and then transfers a linkage control signal so that after the set top box set as a slave receives the linkage control signal, the signal will be contrasted with the pairing signal initially set for assuring whether the pairing of the slave and master is correct.

4. The single subscriber multiple set top boxes linkage device as claimed in claim 1, wherein the linkage control signal includes a master series number, at least one slave series number, time codes, random codes, etc. and it is added with a scrambling function.

5. The single subscriber multiple set top boxes linkage device as claimed in claim 1, wherein if the slave is moved to other subscriber, the signal passes through more distributors so that the signal is decayed dramatically and thus the slave can not work.

6. The single subscriber multiple set top boxes linkage device as claimed in claim 1, wherein the linkage control signal uses a master series number and time code for propagating clock signal to perform a control of time division and multiplexing so as to separate the interference of the master signals of different subscribers.

7. A linkage control method using a single subscriber multiple set top boxes linkage mechanism, the method comprising the steps of pairing and asserting of set top box; in pairing, a head end outputting a pairing signal which is transferred by a cable TV network module, and then is transferred to at least two slaves of a subscriber by distributors for setting the set top boxes as a master and a slave; the installer assuring whether the pairing is successful; in the set top boxes, the master being added with a timing code responsive to a control signal of a head end and then sending out a linkage control signal; after at least one slave receiving the linkage control signal, the linkage control signal being contrasted with the pairing signal for assuring whether of the pairing of the slave and master are successful, and the slave contrasting the timing code from the head end and the linkage control signal received; if it is correct, then the pairing is assured.

8. The method as claimed in claim 7, wherein the head end is formed by a subscriber management unit and a linkage control unit.

9. The method as claimed in claim 7, wherein the subscriber pairing signal outputted from the head end includes a master series number and a slave series number.

10. The method as claimed in claim 7 wherein the linkage control signal includes a master series number, at least one slave series number, time codes, random codes, etc. and it is added with a scrambling function.

11. The method as claimed in claim 7, wherein if the slave is moved to other subscriber, the signal passes through more distributors so that the signal is decayed dramatically and thus the slave can not work.

12. The method as claimed in claim 7, wherein the linkage control signal uses a master series number and time code for propagating clock signal to perform a control of time division and multiplexing so as to separate the interference of the master signals of different subscribers.

13. A set top box comprising:
a tuner for tuning and receiving a digital signal of a cable TV;
a demodulator for demodulating the digital signal of the cable TV;
a single chip set top box connected to the demodulator for restoring and outputting the demodulated digital signal;
a memory connected to the single chip set top box for storing data;
an RF modulating module serially connected to the single chip set top box for receiving a control signal and emitting a linkage control signal; and
a bypass capacitor connected to the RF modulating module and the tuner for isolating a DC level so that AC signal passed through.

14. A linkage control method of a direct propagating satellite available in the set top boxes of the direct propagating satellite by using a single subscriber multiple set top boxes linkage mechanism, the method comprising the steps of pairing of a head end and assertion of satellite set top boxes; in pairing, a head end outputting a pairing signal which is transferred by a satellite antenna, and then is transferred to at least two slaves of a subscriber by a down converter for setting the set top boxes as a master and a slave; in the set top boxes, the master being added with a timing code responsive to a control signal of a head end and then sending out a linkage control 1 signal; after at least one slave receiving the linkage control signal, the linkage control signal being contrasted with the pairing signal for assuring whether of the pairing of the slave and master are successful, and the slave contrasting the timing code from the head end and the linkage control signal received; if it is correct, then the pairing is assured.

15. The method as claimed in claim 14, wherein an input end of the satellite set top box is installed with a RF receiving module and the output end thereof is installed with a RF modulating module for receiving and emitting signals.

16. The method as claimed in claim 14, wherein the subscriber pairing signal outputted from the head end includes a master series number and a slave series number.

17. The method as claimed in claim 14, wherein the linkage control signal includes a master series number, at least one slave series number, time codes, random codes, etc. and it is added with a scrambling function.

18. The method as claimed in claim 14, wherein the linkage control signal uses a master series number and time code for propagating clock signal to perform a control of time division and multiplexing so as to separate the interference of the master signals of different subscribers.
